# EUROPÄISCHE PATENTANMELDUNG

(11) **EP 0 598 239 A1**
(43) Veröffentlichungstag der Anmeldung: **25.05.1994**
(21) Anmeldenummer: 93117012.0
(22) Anmeldetag: 21.10.1993
(51) Int. Cl.: G11B 5/704, G11B 5/84

(54) **Verfahren zur Herstellung von magnetischen Aufzeichnungsträgern**

(30) Priorität: 19.11.1992 DE 4238996
(71) Anmelder: BASF Magnetics GmbH, D-68165 Mannheim (DE)
(72) Erfinder: Hagemeyer, Alfred, Dr., D-67063 Ludwigshafen (DE); Hibst, Hartmut, Dr., D-69198 Schriesheim (DE); Maurer, Richard, Dr., D-67346 Speyer (DE); Jakusch, Helmut, Dr., D-67227 Frankenthal (DE); Baeuerle, Dieter, Prof. Dr., D-4203 Altenberg (DE); Heitz, Johannes, D-79111 Freiburg (DE)
(74) Vertreter: Karau, Wolfgang, Dr.

(57) **Zusammenfassung**

Die Erfindung betrifft ein Verfahren zur Herstellung von magnetischen Aufzeichnungsträgern, im wesentlichen bestehend aus einem polymeren Substrat und mindestens einer auf das Substrat aufgebrachten Magnetschicht aus einer verfestigten Dispersion feinverteilter magnetischer Pigmente in einer Lösung organischer Bindemittel und üblichen Zusatzstoffen, wobei das Substrat insbesondere zur Verbesserung der Haftfestigkeit der Magnetschicht auf dem Substrat mit einer durch den Zerfall von Excimern erzeugten UV-Strahlung behandelt wird.

## Beschreibung

Die Erfindung betrifft ein verfahren zur Herstellung von magnetischen Aufzeichnungsträgern, im wesentlichen bestehend aus einem polymeren Substrat und mindestens einer auf das Substrat aufgebrachten Magnetschicht aus einer verfestigten Dispersion feinverteilter magnetischer Pigmente in einer Lösung organischer Bindemittel und üblichen Zusatzstoffen, welche sich durch eine verbesserte Haftfestigkeit der Magnetschicht auf dem Substrat auszeichnen.

Magnetische Aufzeichnungsträger auf der Basis pigmentierter Magnetschichten sind bekannt und werden in großem Umfang für konventionelle Audio-, Video- und Datenaufzeichnung eingesetzt. Ihre Herstellung erfolgt üblicherweise dadurch, daß ferromagnetische Pigmente, wie Eisenoxide, Chromdioxide, Co-dotierte Eisenoxide, Bariumferrite oder metallisches Eisen in einer Bindemittelmischung dispergiert werden und die fertige Dispersion dann auf die Fläche eines polymeren Trägermaterials aufgebracht wird. Der Binder besteht vorzugsweise aus den üblichen PU-Bindemitteln, die aus Polyisocyanaten, Polydiolen und Kettenverlängerern aufgebaut sind. Zusätzlich können noch physikalisch trocknende Bindemittel wie Di(meth)acrylat-Copolymerisate, Phenoxyharze, Celluloseester-Bindemittel oder dgl. enthalten sein. Weiter können Dispergierhilfsmittel, Stabilisatoren, mineralische Füllpartikel etc. enthalten sein. Die polymeren Trägermaterialien sind vorwiegend flexible Substrate, vor allem aus Polyethylenterephthalat, Polyaramid oder Polyimid, aber auch aus Polyethylennaphthalat oder Polysulfon. Beim Aufbringen dieser bindemittelhaltigen pigmentierten Magnetschichten auf die genannten oder ähnliche polymere Substrate stellen nicht nur die geforderten magnetischen Eigenschaften sowie die mechanische und chemische Stabilität der Magnetschicht besondere Anforderungen an die Verfahrensweise, sondern es muß auch eine gute Haftung zwischen einerseits dem Polymermaterial des Substrats und andererseits der Magnetdispersion gewährleistet sein. Außer der reinen Fixierung der Magnetschicht auf der Polymeroberfläche ist auch eine gute Haftung, insbesondere zur Erzielung eines geringen Verschleißes der Magnetschicht, bei der tribologischen Beanspruchung durch den Magnetkopf wesentlich. Diese Problemfelder dürfen jedoch niemals isoliert betrachtet werden, da eine wie auch immer geartete Optimierung der mechanischen Eigenschaften der zur Diskussion stehenden magnetischen Aufzeichnungsmedien niemals zu Einbußen auf Seiten der magnetischen, d.h. die Informationsspeicherung betreffenden Eigenschaften führen darf. Spezialfolien mit einer oberflächlichen Primerschicht können hierfür zwar geeignet sein, jedoch erfordert ihre Herstellung besondere und aufwendige Verfahrenstechniken, zusätzliche Beschichtungsschritte und Umgang mit Chemikalien. Ferner besteht beim Einsatz von Primern erhöhte Verschmutzungsgefahr.

Die anderen an sich bekannten Verfahren der Oberflächenvorbehandlung von Polymeroberflächen im Plasma, durch Glimmentladung, Coronaentladung, Flämmen, chemisches Ätzen oder Ionenbestrahlung vor dem Beschichten können nie voll befriedigen. Wesentlich hierfür ist vor allem die nur ungenügende Kontrollierbarkeit der Energieeinwirkung und/oder Restgassteuerung sowie die auftretende Kontamination durch Zersetzungsprodukte bei diesen bekannten Verfahren.

Die bisher beschriebenen Verfahren der UV-Bestrahlung von Polymeroberflächen mit kontinuierlichen UV-Strahlern, wie z.B. Quecksilberdampflampen, zur Verbesserung der Lackierbarkeit, Bedruckbarkeit oder Anfärbbarkeit (US-A 4 933 123) oder zur Erhöhung der Haftfestigkeit von Klebstoffen auf PET-Folien (JP-A 1313 850/1989) ergeben bei pigmentierten Magnetdispersionen jedoch nur eine unzureichende Steigerung der Haftung. Aufgrund der langen Bestrahlungszeiten mit kontinuierlichen UV-Lampen ist der Prozeß sehr zeitintensiv und erlaubt keine großen Verarbeitungsgeschwindigkeiten. Kontinuierliche UV-Lampen strahlen ein breites quasikontinuierliches Spektrum ab, so daß sich die Energie auf viele Wellenlängen verteilt und daher bei den photochemisch aktiven Wellenlängen nur ein entsprechend kleiner Teil der Energie zur Modifizierung der Oberfläche zur Verfügung steht. Dadurch wird die Energieausnutzung ineffizient und die tatsächlich aufgenommenen, photochemisch wirksamen Leistungsdichten sind dann vielfach unterhalb der Schwellenwerte, die für merkliche Oberflächenveränderungen mindestens erforderlich sind. Außerdem überlagern sich sämtliche, bei den verschiedenen Wellenlängen simultan ablaufenden Mechanismen.

Die Verfahren der UV-Bestrahlung von Polymeroberflächen mit Lasern zur Verbesserung der Adhäsion von Farben (EP-A 233 755) sind für die Herstellung von bindemittelhaltigen pigmentierten magnetischen Aufzeichnungsmedien nicht geeignet, da der bei den hohen verwendeten Fluenzen durch die Strahlung induzierte Masseabtrag auf der Oberfläche des Polymeren eine derart ausgeprägte Oberflächenstruktur bewirkt, daß zwar eine verbesserte Haftfestigkeit der aufgebrachten Schichten erreicht, aber gleichzeitig eine Verschlechterung der Speichereigenschaften in Kauf genommen werden muß.

Aufgabe der vorliegenden Erfindung war es daher, ein Verfahren zur Herstellung von magnetischen Aufzeichnungsträgern, bei denen auf einem polymeren Substrat eine Magnetschicht bestehend aus in einem Bindemittel dispergierten ferromagnetischen Pigmenten ausgebildet ist, bereitzustellen, das die vorgenannten Nachteile nicht aufweist und das sich insbesondere durch eine verbesserte Haftfestigkeit der Magnetschicht auf dem Trägermaterial auszeichnet sowie eine Gleichmäßigkeit der Eigenschaften auch auf großen Flächen bei hoher Verfahrensgeschwindigkeit gewährleistet.

Es wurde nun gefunden, daß sich die Aufgabe mit einem Verfahren zur Herstellung von magnetischen Aufzeichnungsträgern, im wesentlichen bestehend aus einem polymeren Substrat und mindestens einer auf das Substrat aufgebrachten Magnetschicht aus einer verfestigten Dispersion feinverteilter magnetischer Pigmente in einer Lösung organischer Bindemittel und üblichen Zusatzstoffen lösen läßt, wenn das polymere Substrat vor dem Aufbringen der Magnetdispersion einer durch den Zerfall von Excimeren erzeugten UV-Strahlung im Wellenlängenbereich von 150 bis 400 nm mit einer Energiedichte unterhalb der Ablationsschwelle ausgesetzt wird.

In einer vorteilhaften Ausgestaltungsform des erfindungsgemäßen Verfahrens wird die UV-Strahlung durch einen UV-Laser als Strahlungsquelle erzeugt, wobei dieser UV-Laser insbesondere ein Excimer-Laser ist, dessen Wellenlänge 248 nm (KrF) oder 308 nm (XeCl) beträgt.

Solche Excimer-Laser sind bekannt. Bei ihrem Einsatz für das erfindungsgemäße Verfahren beträgt die Repetitionsrate zwischen 1 und 1000 Hz, geeignete Pulslängen bewegen sich zwischen 10 ns und 100 ns.

In einer weiteren vorteilhaften Ausgestaltungsform des erfindungsgemäßen Verfahrens wird die UV-Strahlung durch einen inkohärenten UV-Excimer-Strahler (Excimer-Lampe) erzeugt, wobei insbesondere die verwendeten Wellenlängen 172 nm (Xe₂), 222 nm (KrCl) oder 308 nm (XeCl) betragen.

Die gemäß dem erfindungsgemäßen Verfahren vorgenommene Bestrahlung des Substrats im definierten Wellenlängenbereich der UV-Strahlung erfolgt mit einer für das jeweilige polymere Substrat und die verwendete Wellenlänge unterhalb der Ablationsschwelle liegenden Energiedichte. Als Ablationsschwelle wird diejenige Energie als spezifische Schwellenenergie bezeichnet, bei der noch keine Ablation auftritt, d.h. bei der noch kein nennenswerter Materialabtrag erfolgt. Zu ihrer Bestimmung werden bei unterschiedlichen Energiedichten die Ablationsraten gemessen. Trägt man die Ablationsraten halblogarithmisch gegen die verwendeten Energiedichten auf, so ist der extrapolierte Schnittpunkt mit der Achse der Energiedichte als Ablationsschwelle definiert. Die Ablationsrate einer UV-Quelle kann beispielsweise dadurch bestimmt werden, daß eine der UV-Strahlung ausgesetzte Lochblende mit einer Linse auf das polymere Substrat abgebildet wird, wobei je nach Energiedichte des UV-Strahls ein rundes Loch unterschiedlicher Tiefe in der Substratfläche entsteht. In besonders einfacher Weise kann die Ablationsschwelle bei Verwendung eines UV-Lasers bestimmt werden. Dazu wird zuerst die gemessene Ätzrate als Verhältnis der jeweiligen Lochtiefe im Substrat zur Pulsanzahl gemessen. Dieser Wert wird gegen den Logarithmus der Energiedichte, d.h. das Verhältnis der Pulsenergie zur Fläche des Lochs im Substrat aufgetragen. Der Schnittpunkt der Extrapolationsgeraden mit der Achse der Energiedichte definiert dann die Schwellenenergiedichte für die Ablation.

Die für das erfindungsgemäße Verfahren geeigneten polymeren Substrate sind bekannt. Es sind vorzugsweise Polyethylenterephthalat (PET), Polyimid (PI), Polyethylennaphthalat (PEN), Polyamid bzw. Polyaramid (PA), Polyetheretherketon (PEEK), Polysulfon (PS), Polyethersulfon (PESU), Polyphenylensulfid (PPS) und thermotrope flüssigkristalline Polymere (LCP), wobei insbesondere PET-Substrate als Trägermaterialien für pigmentierte Magnetmedien herangezogen werden.

Diese Substrate werden nun gemäß dem erfindungsgemäßen Verfahren der UV-Strahlung eines inkohärenten Excimer-Strahlers (Excimer-Lampe) oder eines Excimer-Lasers mit einer unter der Ablationsschwelle liegenden Energiedichte ausgesetzt. Diese Schwellenenergiedichte ist wellenlängenabhängig und für die unterschiedlichen polymeren Substrate unterschiedlich. Für PET bewegt sie sich im allgemeinen in einem Bereich zwischen 10 und 200 mJ/cm². Beispielsweise beträgt die Schwellenenergie für PET-Folien (Mylar®) bei 248 nm Wellenlänge des Excimer-Lasers etwa 40 mJ/cm², während die Schwelle bei 308 nm Wellenlänge bei etwa 170 mJ/cm² liegt. Im Rahmen einer zweckmäßigen Durchführung des erfindungsgemäßen Verfahrens wird vorzugsweise ein UV-Excimer-Laser eingesetzt und das Trägermaterial mit kleinen Pulszahlen zwischen 1 und 25 Pulsen/Fläche bestrahlt.

Auf ein solchermaßen vorbehandeltes Substrat wird nun in bekannter Vorgehensweise die Magnetdispersion aufgebracht. Geeignete Magnetpigmente sind entweder oxidische Materialien wie gamma-Fe₂O₃, Co-dotiertes Fe₂O₃, CrO₂, Bariumferrit (BaFe) oder Metallpigmente (Fe). Während BaFe plättchenförmig ist, sind alle anderen Pigmente nadelförmig. Bevorzugt sind Co-dotiertes Eisenoxid und Chromdioxid oder Mischungen davon. Die Herstellung der Magnetdispersion geschieht in der Weise, daß die Pigmente in einem Bindemittelgemisch aus vorwiegend Polyurethan, physikalisch trocknenden Bindemitteln, Dispergierhilfsmitteln, Gleitmitteln, mineralischen Füllpartikeln etc. dispergiert bzw. geknetet und dispergiert werden. Die Magnetdispersion wird nach dem Zumischen von Polyisocyanatvernetzer filtriert und mit der üblichen Beschichtungsmaschine, z.B. mittels eines Linealgießers, auf den nichtmagnetischen Träger aufgebracht, mit Magneten ausgerichtet und getrocknet. Die so gewonnene Magnetschicht kann anschließend durch Satinage gelättet werden. Die auf diese Weise hergestellten bindemittelhaltigen Magnetschichten sind im allgemeinen zwischen 0,3 µm und 20 µm, vorzugsweise zwischen 1 µm und 10 µm, dick.

Im Rahmen der Nutzung dieser erfindungsgemäß hergestellten magnetischen Aufzeichnungsträger kann es gegebenenfalls zweckmäßig sein, zur Verbesserung der Gleit-, Abriebeigenschaften und der Korrosionsstabilität dem Binder weitere Additive wie Gleitmittel, Stabilisatoren, mineralische Füllstoffpartikel etc. zuzusetzen.

Die nach dem erfindungsgemäßen Verfahren erhaltenen magnetischen Aufzeichnungsträger zeichnen sich durch eine erhöhte Haftfestigkeit der magnetischen Aufzeichnungsschicht auf dem polymeren Substrat aus. Damit wird gleichzeitig auch eine Verringerung des Verschleißes der Magnetschicht bei der tribologischen Beanspruchung durch den Magnetkopf erzielt. Diese Verbesserungen beruhen jedoch nicht auf einer erhöhten mechanischen Verzahnung der magnetischen Aufzeichnungsschicht auf einer stark aufgerauhten Oberfläche, was eine Verschlechterung der elektromagnetischen Aufzeichnungseigenschaften bewirken würde.

Vorteilhaft ist außerdem die leichte Steuerbarkeit und Kontrollierbarkeit des Substratbehandlungsprozesses durch eine externe, d.h. außerhalb des eigentlichen Prozeßraumes angebrachte Strahlungsquelle.

Sowohl aus diesem Grund als auch in Anbetracht der Vermeidung eines Materialabtrags bei dem Vorgehen gemäß vorliegender Erfindung ergibt sich auch keine Verunreinigung der Apparaturen. Des weiteren ist es mit dem erfindungsgemäßen Verfahren wegen des Einsatzes nur kleiner Energiedichten und, bei der Verwendung eines UV-Lasers, auch geringer Pulszahlen möglich, große Flächen bei erhöhtem Durchsatz gleichmäßig zu bestrahlen. Diese Gleichmäßigkeit ist eine gerade für magnetische Aufzeichnungsmedien wichtige Voraussetzung.

Neben der verbesserten Haftung führte die UV-Bestrahlung auch zu einer besseren Benetzung der vorbehandelten polymeren Substrate durch die Magnetdispersion. Die vorbehandelten Substrate lassen sich dann verfahrenstechnisch einfacher und gleichmäßiger porenfrei beschichten.

Die Erfindung sei anhand folgender Beispiele näher erläutert.

### Beispiel 1 (Vergleichsbeispiel)

Eine handelsübliche PET-Folie (Mylar®-Folie der Fa. DuPont, 50 µm dick) wurde mit einem Rakel mit einer 5 µm dicken Magnetdispersion bestehend aus ferromagnetischen CrO₂-Nadeln, PU-Bindemittel entsprechend Patent US-A 4 568 611, handelsüblichen Dispergiermitteln, mineralischen Füllpartikeln und Gleitmitteln beschichtet und vorgetrocknet. Aus der Folie mit der aufgebrachten Lackschicht wurden anschließend 2 Muster entnommen, die bei erhöhter Temperatur von 60°C im Klimaschrank bei 25 % r.F. für 3 bzw. für 10 Tage ausgehärtet wurden. Die PET-Folie wurde vor der Beschichtung keiner Vorbehandlung unterzogen.

Die Haftung der aufgebrachten Magnetschicht wurde in einem Drehstempeltest mit einem Twist-o-meter (Fa. Epprecht, Dottikon, Schweiz) bestimmt. Dabei wird ein Stempel (Al-Zapfen von 12 mm Durchmesser mit Innenloch) auf die Beschichtung aufgeklebt und mit einem Drehmoment bis zum Bruch des Verbundes belastet. Aufgrund der Krafteinleitung über Scherkräfte an Stelle von Zugkräften wird eine dynamische Beanspruchung des Substrats (plastische Deformation) weitgehend ausgeschlossen, so daß das Twist-o-meter bei dünnen Beschichtungen auf flexiblen Folien geeigneter ist als Peel- und Pulltests. Zur Quantifizierung der erzielten Haftfestigkeit wird der Bruchteil in % der gesamten Stempelfläche bestimmt, der von der Beschichtung durch die Belastung enthaftet werden kann (der Rest der Beschichtung haftet dann nach dem Test noch fest auf dem Substrat; an diesen Stellen kommt es meistens zum Bruch zwischen Beschichtung und Klebstoff). Bei sehr guter Haftung kommt es dann zum Bruch im Substrat, d.h. das Interface hält in diesem Fall höheren Belastungen stand als die bulk-Materialien von Substrat und/oder Beschichtung.

Es zeigte sich, daß die Magnetschicht vollständig abgedreht werden konnte, d.h. es trat Adhäsionsbruch zwischen PET-Folie und Lackschicht auf (Tabelle 1).

### Beispiel 2

Es wurde wie in Beispiel 1 beschrieben verfahren, jedoch wurden vor dem Aufbringen der Magnetschicht die PET-Folien im Vakuum mit einem KrF-Excimer-Laser bei 248 nm mit 7 Pulsen pro Fläche bestrahlt (Bestrahlung in einer Hochvakuumanlage durch ein Quarzfenster), wobei die in der Tabelle 1 angegebenen Energiedichten verwendet wurden. An den jeweils erhaltenen Mustern wurde mit dem Twist-o-meter die Haftfestigkeit beurteilt (Tabelle 1).

Es zeigte sich, daß bei der geringsten verwendeten Fluenz von 5,1 mJ/cm² das Bruchbild durch Mischbruch gekennzeichnet ist, bei dem der Verbund teilweise durch Adhäsionsversagen zwischen PET-Folie und Lackschicht (Adhäsionsbruch) und teilweise durch Kohäsionsversagen in der PET-Folie (Kohäsionsbruch: Folie reißt ein) gelöst wird, d.h. Ad- und Kohäsionsbruch liegen nebeneinander vor. Für höhere Fluenzen tritt dann nur noch ausschließlich Kohäsionsbruch auf, entweder in der Klebeschicht, mit der der Stempel auf der Beschichtung fixiert wird (Araldit 2 Komponenten Epoxy Kleber), oder in der PET-Substratfolie durch Reißen derselben. Daraus folgt, daß die Haftung in diesen Fällen besser ist als die innere Kohäsionsfestigkeiten des Klebers oder der Folie. Es wurde kein Unterschied gefunden zwischen den Beschichtungen, die für 3 oder für 10 Tage ausgehärtet wurden. Die Haftungsverbesserung kann also bei sehr niedrigen Laserfluenzen unterhalb der Ablationsschwelle erreicht werden.

**Tabelle 1**

| Fluenz (mJ/cm²) | Bruchbild |
|---|---|
| Beispiel 1: | |
| unbestrahlt | 100 % Adhäsionsbruch Folie/Magnetschicht |

| Beispiel 2: | |
|---|---|
| 5.1 | Mischbruch: 50 % Adhäsionsbruch Folie/Schicht + 50 % Kohäsionsbruch im Kleber |
| 10.6 | 100 % Kohäsionsbruch in Kleber/Folie |
| 14.6 | 100 % Kohäsionsbruch |
| 14.6 | 100 % Kohäsionsbruch |
| 20.0 | 100 % Kohäsionsbruch |
| 34.6 | 100 % Kohäsionsbruch |

### Beispiel 3

Es wurde wie in Beispiel 1 beschrieben verfahren, jedoch wurden vor dem Aufbringen der Magnetschicht die PET-Folien in Luft mit einer KrCl-Excimer-Lampe bei 222 nm mit einer Leistungsdichte von 5 mW/cm² bestrahlt, wobei die in der Tabelle 2 angegebenen Bestrahlungsdauern verwendet wurden. An den jeweils erhaltenen Mustern wurde mit dem Twist-o-meter die Haftfestigkeit bewertet.

Während bei der unbestrahlten Referenzprobe wieder 100 % Adhäsionsbruch gefunden wurde, die Magnetschicht also vollständig von der Substratfolie abgedreht werden konnte, ließen sich die mit der Excimer-Lampe vorbehandelten Proben nicht mehr abdrehen und es kam in jedem Falle zu Kohäsionsversagen in der PET-Folie. Durch die Bestrahlung ist also die Haftfestigkeit auf so hohe Werte verbessert worden, daß nun die innere Festigkeit der PET-Folie die schwächste Komponente des Verbundes darstellt und zuerst versagt. Wiederum ergaben sich keine Unterschiede zwischen Proben, die 3 oder 10 Tage lang ausgehärtet wurden.

**Tabelle 2**

| Bestrahlungsdauer | Bruchbild |
|---|---|
| unbestrahlt | 100 % Adhäsionsversagen Folie/Schicht |
| 30 min | 100 % Kohäsionsversagen PET-Folie |
| 60 min | 100 % Kohäsionsversagen PET-Folie |

## Patentansprüche

1. Verfahren zur Herstellung von magnetischen Aufzeichnungsträgern, im wesentlichen bestehend aus einem polymeren Substrat und mindestens einer auf das Substrat aufgebrachten Magnetschicht aus einer verfestigten Dispersion feinverteilter magnetischer Pigmente in einer Lösung organischer Bindemittel und üblichen Zusatzstoffen, dadurch gekennzeichnet, daß das polymere Substrat vor dem Aufbringen der Magnetdispersion einer durch den Zerfall von Excimeren erzeugten UV-Strahlung im Wellenlängenbereich von 150 bis 400 nm mit einer Energiedichte unterhalb der Ablationsschwelle ausgesetzt wird.

2. Verfahren gemäß Anspruch 1, dadurch gekennzeichnet, daß die UV-Bestrahlung mit einem gepulsten UV-Excimer-Laser durchgeführt wird.

3. Verfahren gemäß Anspruch 1, dadurch gekennzeichnet, daß die UV-Bestrahlung mit einem inkohärenten Excimer-Strahler durchgeführt wird.
